# EUROPÄISCHE PATENTSCHRIFT

(11) **EP 4 298 058 B1**
(45) Veröffentlichungstag und Bekanntmachung des Hinweises auf die Patenterteilung: **25.02.2026**
(21) Anmeldenummer: 23700773.7
(22) Anmeldetag: 12.01.2023
(51) Int. Cl.: C01B 32/60, C01F 5/24, C04B 28/10, B01D 53/62, C04B 35/00, C04B 20/02, C04B 14/26, C04B 18/02

(54) **VERFAHREN ZUM HERSTELLEN EINER GESTEINSKÖRNUNG**
METHOD FOR PRODUCING AN AGGREGATE
PROCÉDÉ DE PRODUCTION D'UN AGRÉGAT

(30) Priorität: 12.01.2022 WO PCT/EP2022/050562
(43) Veröffentlichungstag der Anmeldung: 03.01.2024
(73) Patentinhaber: OLIMENT ® GmbH, 04571 Rötha OT Espenhain (DE)
(72) Erfinder: BELLMANN, Frank, 99425 Weimar (DE)
(74) Vertreter: Wunderlich & Heim Patentanwälte PartG mbB
(86) Internationale Anmeldenummer: PCT/EP2023/050601
(87) Internationale Veröffentlichungsnummer: WO 2023/135193

(56) Entgegenhaltungen:
- EP-A1- 2 100 854
- EP-B1- 1 579 016
- WO-A1-2008/061305
- WO-A1-2014/095344
- DE-C1- 3 742 415
- US-A1- 2018 179 107

## Beschreibung

Die Erfindung betrifft ein Verfahren zum Herstellen einer Gesteinskörnung, bei dem CO₂ sequestriert wird.

Im Bauwesen werden als Gesteinskörnung natürliche und künstliche Gesteinskörner bezeichnet. Diese können beispielsweise aus natürlichen Lagerstätten stammen oder bei der Wiederverwertung von Baustoffen oder als industrielles Nebenerzeugnis anfallen. Alternative nicht mehr aktuelle aber in etwa gleichbedeutende Bezeichnungen in der Bauindustrie sind Betonzuschlag, Mineralstoffgemisch, Mineralgemisch oder Mineralstoff.

Grundsätzlich kann eine Gesteinskörnung zusammen mit einem Bindemittel, bei dem es sich meist um Zement handelt, und Zugabewasser zu Beton verarbeitet werden. Aber auch Asphalt ist eine Mischung aus Gesteinskörnung mit Bitumen. Kornform, Festigkeit und Sieblinie der Gesteinskörnung können hierbei unter anderem einen Einfluss auf die Eigenschaften des entstehenden Baustoffes haben.

Gesteinskörnung ohne Bindemittel wird beispielsweise zum Erstellen unbefestigter Wege, Sicker- und Frostschutzpackungen, kapillarbrechender Schichten und ähnlicher Schüttungen verwendet.

Kohlendioxid (CO₂) wirkt in der Atmosphäre als Treibhausgas und wird als eine der Hauptursachen für die von Menschen verursachte globale Erwärmung angesehen. Neben der grundsätzlichen Reduktion von CO₂-Emissionen wird parallel dazu versucht, bereits in der Atmosphäre befindliches CO₂ zu binden. Das Binden von CO₂ kann auch verwendet werden, um Herstellungsverfahren, bei denen eine große Menge an CO₂ entsteht, wie etwa bei der Zementherstellung, CO₂-neutral zu gestalten.

Unter Sequestrierung von CO₂ versteht man insbesondere CO₂ aus der Atmosphäre zu entfernen, idealerweise derart, dass das CO₂ mit anderen Stoffen verbunden wird, dass es nicht wieder entweichen kann. Hierzu sind verschiedenste Vorschläge bekannt. Eine Möglichkeit liegt hierbei darin Olivin zu verwenden.

Bei Olivin handelt es sich um ein Mineral der allgemeinen Zusammensetzung A₂[SiO₄], wobei für A verschiedene zweiwertige Ionen auftreten können wie Magnesium (Forsterit, Mg₂SiO₄), Eisen (Fe₂SiO₄, Fayalit), Mangan (Mn₂SiO₄, Tephroit) sowie weitere Ionen und eine Kombination der verschiedenen Kationen, da es sich bei Olivin um eine Mischkristallserie handelt.

Die Patentliteratur zur Beschleunigung einer Sequestrierung von Kohlendioxid bei einer Reaktion mit Olivin ist sehr umfangreich. Viele Verfahren zur Sequestrierung von CO₂ unter Verwendung von Olivin beruhen auf dem folgenden Prinzip und unterscheiden sich hauptsächlich in der Art und Weise der Reaktionsbeschleunigung.

Mg₂SiO₄ + 2 CO₂→ 2 MgCO₃ + SiO₂

Nach der WO 2007/069902 soll die Reaktion durch Mahlung und Einstellung bestimmter pH-Werte beschleunigt werden, die WO 2008/140821 und die WO2008/061305 schlagen ein Beschleunigen der Reaktion durch hohe Temperaturen, hohe CO₂-Partialdrücke und hohe Feinheit des Olivins vor. Die WO 2008/101293 schlägt eine Ammoniumzugabe, die WO 2007/106883 die Zugabe einer Base und die US 4944928 die Zugabe von Salzsäure vor.

Neben diesen Verfahren gibt es eine große Anzahl weiterer Verfahren, die in der Lage sind, die Sequestrierung von Kohlendioxid bei der Reaktion mit Olivin zu beschleunigen, wobei alle diese Verfahren komplizierte Technologien sowie teure Ausgangsstoffe verwenden.

In dem CO2min-Projekt wurde versucht, eine solche Karbonatisierung von Olivin mit der Zementherstellung zu verbinden. Das Ziel ist eine Abscheidung der CO₂-Emissionen der Zementindustrie durch Karbonatisierung von Olivin. Demzufolge wird die Zementherstellung unverändert fortgeführt unter Beibehaltung des vorhandenen Hochtemperaturprozesses. Das dabei entstehende Kohlendioxid wird durch eine Reaktion mit Olivin in Form von Magnesiumkarbonat und SiO₂ gebunden. Dieser Anfallstoff kann dann dem Zement zugegeben und somit entsorgt werden. Allerdings ist es offensichtlich nicht möglich, den Olivin vollständig in Magnesiumkarbonat umzusetzen, vgl. D. Kremer, H. Wotruba: Separation of products from mineral sequestration of CO2 with primary and secondary materials. Minerals, Band 10 (2020), 1098 ff*.* Dafür wurden in dem Projekt sehr hohe CO₂-Partialdrücke (17 bar) und hohe Temperaturen (175°C) verwendet. Trotz der Autoklavbehandlung war der Umsatzgrad des Olivins gering und man bräuchte sehr große Olivinmengen, um den geringen Umsatzgrad zu kompensieren. Auch die gewählte Prozesstechnologie ist wohl nicht geeignet, Kohlendioxid im industriellen Maßstab zu binden.

Eine weitere Idee zum Binden von Kohlendioxid durch eine Reaktion mit Olivin wurde ebenfalls in den Niederlanden entwickelt, vgl. R. D. Schuiling, P. Krijgsman: Enhanced weathering: An effective and cheap tool to sequester CO2. Climate change, Band 74 (2006), 349-354. Dabei wird Olivin auf Ackerflächen ausgestreut oder an Stränden verteilt. Wenn eine Auflösung des Olivins in Magnesiumionen erfolgt, könnte das Niederschlags- beziehungsweise Meerwasser gleichzeitig Kohlendioxid in Form von HCO₃⁻Ionen nach der folgenden Gleichung aufnehmen.

Mg₂SiO₄ + 4 CO₂ + 2 H₂O → 2Mg²⁺ + 4 HCO₃⁻ + SiO₂

Allerdings zeigte ein Laborversuch der Universität Hamburg, dass die beschriebene Reaktion nicht in der dargestellten Form abläuft. Selbst wenn man die gesamte Ackerfläche der Welt mit Olivin bestreuen würde, könnte man lediglich 0,2% der globalen Kohlendioxidemissionen abscheiden, vgl. T. Amann et al.: Enhanced weathering and related element fluxes- a cropland mesocosm approach. Biogeosciences, Bd.17(2020), 103-109*.*

Die WO 2008/061305 A1 offenbart ein Verfahren zur Sequestrierung von Kohlendioxid durch Reaktion von Kohlendioxid mit einem vorher auf eine durchschnittliche Teilchengröße von weniger als 75 Mikron zerkleinerten serpentinhaltigen Ausgangsmaterial, um ein entsprechendes Erdalkalimetallkarbonat zu bilden.

WO 2014/095344 A1 offenbart ein Verfahren zur Herstellung einer Tablette zur Verwendung in einem automatischen Abschaltmechanismus für eine Wasserreinigungsvorrichtung, umfassend Bereitstellung einer Zusammensetzung enthaltend Kalziumkarbonat, 0,9-18 Gew% Magnesiumkarbonat, 23-50 Gew% Kalziumsulfat, 0,5-8 Gew% Bindemittel (Verhältnis (Gesamtmenge CaCO3 MgCO3):CaSO4 = 0,9:1 bis 3:1); Mischen von CaCO3, MgCO3, CaSO4; Granulieren der Mischung und Trocknen der Körner auf einen Feuchtigkeitsgehalt von 4-10%; Mischen des Bindemittels mit der Mischung vor oder während der Granulierung; Erhalten von Körnern mit einer Teilchengröße von 200-1,180 Mikrometern; und Komprimieren des Granulats mit einer Kraft von 2 bis 15 Tonnen, um die Tablette zu erhalten.

DE 37 42 415 C1 offenbart ein Abdeckschüttgut zum Abdecken von flüssigem Roheisen oder Stahl in metallurgischen Gefäßen. Das Schüttgut besteht aus Feilet geformt aus wenigstens feingemahlenem Olivin, einem Binder (Stärke, Zelluloseether oder hydraulisches Bindemittel) und ggf. Kalkstein, Dolomit, Magnesit, Ton, Bentonit. Offenbart wirf ferner ein Verfahren zur Herstellung dieser Pellets, wobei die feinkörnigen Anteile und der Binder gemischt, die Mischung mit Hilfe eines rotierenden Pelletiertellers unter Zugabe von Wasser, z. B. in Form von Wassernebel, zu Pellets geformt, und anschließend getrocknet wird.

Der Erfindung liegt die **A u f g a b e** zugrunde, ein effizientes Verfahren zum Herstellen einer Gesteinskörnung anzugeben, bei dem zusätzlich CO₂ sequestriert werden kann. Diese Aufgabe wird erfindungsgemäß durch ein Verfahren mit den Merkmalen des Anspruchs 1 gelöst.

Weitere vorteilhafte Ausführungen sind in den abhängigen Ansprüchen und der weiteren Beschreibung angegeben.

Entsprechend Anspruch 1 ist vorgesehen, dass zunächst ein Ausgangsprodukt bereitgestellt wird, welches mindestens 20 Mass.-% Magnesiumsilikathydrat (M₉₃Si₂O₅(OH)₄, Mg₃Si₄O₁₀(OH)₂), bevorzugt mindestens 40 Mass.-%, bevorzugter mindestens 60 Mass.-%, noch weiter bevorzugt mindestens 80 Mass.-%, aufweist. Ein Beispiel hierfür ist Serpentinit. Serpentinit ist ein metamorphes Gestein, welches durch natürliche Umwandlung, insbesondere Verwitterung, von ultramafischen Gesteinen entsteht. Vorteilhaft sollte der Ausgangsstoff kein SiO₂ enthalten und es soll auch kein Stoff zugegeben werden, welcher bei der thermischen Behandlung SiO₂ freisetzt. SiO₂ könnte bei einer nachfolgenden thermischen Behandlung mit dem Magnesiumsilikathydrat reagieren und dabei die Produktqualität vermindern.

Ein wichtiges Mineral in ultramafischen Gesteinen ist Olivin. Dabei handelt es sich um eine Mischkristallreihe zwischen Fayalit (Fe₂SiO₄), Forsterit (Mg₂SiO₄), Tephroit (Mn₂SiO₄) und anderen Mineralien der Form A₂[SiO₄]. Natürliche Olivinvorkommen sind dokumentiert und häufig handelt es sich bei dem Olivin um ein magnesiumreiches Material mit Eisenanteilen.

Die beim Verwittern auftreten zugrunde liegenden Reaktionen sind wie folgt, wobei diese hier vereinfacht, ausgehend von Forsterit (Mg₂SiO₄) angegeben sind

(1) 2 Mg₂SiO₄ + 3 H₂O → Mg₃Si₂O₅(OH)₄ + Mg(OH)₂

(2) 3 Mg₂SiO₄ + 5 SiO₂ + 2 H₂O → 2 Mg₃Si₄O₁₀(OH)₂

Das Magnesiumsilikathydrat (M₉₃Si₂O₅(OH)₄, Mg₃Si₄O₁₀(OH)₂) kann in Form von Lizardit, Antigorit, Talk und anderen Formen vorliegen. Hierbei ist zu berücksichtigen, dass der stöchiometrische Wassergehalt teilweise geringer ist - im Bereich von 13 Mass.-% bei Antigorit - als der durch Versuchen ermittelbare - im Bereich von 16 Mass.-% bis 20 Mass.-%. Dies kann damit begründet werden, dass die Materialen zum Teil so fein sind, dass auch an deren Oberfläche Wasser anhaften kann.

In ähnlicher Weise gelten derartige Abweichungen von der Stöchiometrie auch für das Verhältnis zwischen Mg und Si. Weiterhin können auch Fremdionen, wie Fe, in den Reaktionsprodukten eingebaut sein. Es können aber auch noch weitere Reaktionsprodukte wie beispielsweise Hydromagnesit, Hämatit, Magnetit oder Gibbsit entstehen. Dies ist jeweils abhängig von der exakten Zusammensetzung des Ausgangsproduktes. Alle oder ein Teil der Reaktionsprodukte können Eisen, Karbonat und Alkalien oder andere Fremdionen enthalten

Dieses Ausgangsprodukt wird auf eine Feinheit entsprechend einer BET-Oberfläche von 0,1 m²/g oder feiner zerkleinert, wobei die BET-Oberfläche nach der Norm DIN ISO 9277:2003-05 Bestimmung der spezifischen Oberfläche von Feststoffen durch Gasadsorption" nach dem BET-Verfahren bestimmt werden kann. Vorteilhaft ist herbei eine BET-Oberfläche von 0,5 m²/g, noch bevorzugter einer BET-Oberfläche von 1,0 m²/g oder noch feiner. Dieses Zerkleinern kann durch Mahlen erfolgen. Abhängig von der Quelle des Magnesiumsilikathydrat kann eine Zerkleinerung im Sinne der Erfindung auch schon beim oder durch den Abbau, das Gewinnen oder allgemeiner der Herstellung erfolgen.

Nach dem Bereitstellen des Ausgangsproduktes folgt eine Homogenisierung des Ausgangsproduktes, sofern dies notwendig ist. Bei dem als Beispiel angeführten Serpentinit handelt es sich um ein Material aus natürlichen Lagerstätten. Es liegt erfahrungsgemäß weder in Reinform noch homogenisiert vor. Das Homogenisieren kann beispielsweise mit einem Mischer oder gleichzeitig beim Zerkleinern auf die gewünschte Feinheit durchgeführt werden.

Anschließend wird das homogenisierte Ausgangsprodukt von gebundenem Wassermittels thermischer Behandlung in einem Aggregat zur thermischen Behandlung zumindest teilweise von gebundenem Wasser entwässert. Das hiervorgeschlagene thermische Behandeln kann auch als Tempern oder Kalzinieren bezeichnet werden. Gebundenes Wasser wird zum Teil auch als Kristallwasser bezeichnet. Es ist von ungebundenem Wasser, welches als freies H₂O angesehen werden kann, abzugrenzen. Eine vollkommene Entwässerung kann durch hohen Aufwand erreicht werden. Entsprechend der Erfindung sollte der Wassergehalt von gebundenem Wasser um mindestens 60%, bevorzugt mindestes um 80%, noch weiter bevorzugt um mindestens 90%, reduziert werden

Zur thermischen Behandlung kann das Ausgangsprodukt auf eine Temperatur zwischen 180 °C und 1000 °C erhitzt werden. Hierbei reicht je nach vorliegender Feinheit bereits ein Erhitzen für wenige Minuten aus. Bevorzugt sind Temperaturen zwischen 300 °C und 800 °C, noch vorteilhafter zwischen 500 °C und 700 °C.

Durch das Entwässern wird in diesem Schritt im Ausgangsprodukt vorhandenes Magnesiumsilikathydrat (M₉₃Si₂O₅(OH)₄, Mg₃Si₄O₄₀(OH)₂) zumindest teilweise in entwässertes Magnesiumsilikathydrat, welches vereinfacht als xMgO·SiO₂:yH₂O dargestellt werden kann, umgewandelt. Das Entwässern bezieht sich hierbei auf die Reduzierung des kristallinen Wassers beziehungsweise des Kristallwassers im umgewandelten Ausgangsprodukt.

Die hier zugrunde liegenden chemischen Abläufe sind, wiederum vereinfacht, wie folgt:

(3) Mg₃Si₂O₅(OH)₄→ 2 xMgO·SiO₂:yH₂O + z H₂O

(4) Mg₃Si₄O₁₀(OH)₂→ 2 aMgO·SiO₂·bH₂O + c H₂O

wobei bei (3) ein weitgehend amorphes Reaktionsprodukt mit einem Mg zu Si Verhältnis von 1,5 bis 2 und einem gebunden Wasserhalt von etwa 3% entsteht. Das in Gleichung (4) entstehende Reaktionsprodukt hat ein noch geringeres Mg zu Si Verhältnis. Daher auch die Variablen a, b, c, x, y und z. Dies ist jeweils abhängig von der exakten Zusammensetzung des Ausgangsproduktes und den Behandlungsparametern.

Nach der Entwässerung liegt der Wassergehalt des gebundenen Wassers im umgewandelten, entwässerten Ausgangsproduktes bevorzugt unter 10 Mass.-%, vorteilhafterweise unter 5 Mass.-%, noch bevorzugter unter 3,5 Mass.-%, noch weiter bevorzugt unter 2,5 Mass.-%.

Das entwässerte Ausgangsprodukt liegt somit als mehrphasiges Produkt vor. Weitere mögliche Nebenphasen sind Hämatit, Magnetit, Enstatit, Feldspäte, Pyroxene, Quarz und amorphe Phasen.

Anschließend an das Entwässern des Ausgangsproduktes kann dieses mit CO₂ kontaktiert werden. Hierbei reagiert das CO₂ mit dem vorhandenen entwässerten Magnesiumsilikathydrat (xMgO·SiO₂·yH₂O). Das CO₂ wird hauptsächlich in entstehendem Magnesiumkarbonat (MgCO₃) und/oder Magnesiumkarbonathydrat (MgCO₃·mH₂O) gebunden. Magnesiumkarbonat wird mit dem Mineralnamen Magnesit bezeichnet. Zu den Magnesiumkarbonathydraten gehören z. B. Barringtonit (m=2), Nesquehonit (m=3), Landsfordit (m=5). Darüber hinaus gibt es noch basische Magnesiumkarbonathydrate wie Artinit, Hydromagnesit und Dypingit.

Die zugrunde liegenden chemischen Abläufe sind vereinfacht und verallgemeinert ausgedrückt wie folgt:

(5) xMgO·SiO₂:yH₂O + q H₂O + x CO₂→ xMgCO₃·(q+y)/xH₂O + SiO₂

wobei q, x und y entsprechende Variablen darstellen. Diese können teilweise Null sein. Ferner ist zu berücksichtigen, dass in Gleichung (5) das entwässerte Magnesiumsilikathydrat nur noch als xMgO·SiO₂:yH₂O auftritt, da es (unvollständig) entwässert wurde. Idealerweise entsteht bei den obigen erfindungsgemäßen Reaktionen kein oder kaum Mg(OH)₂.

Vor oder nach dem Schritt des Kontaktierens des entwässerten Ausgangsproduktes mit CO₂ ist es vorgesehen, dass dieses zu Festkörpern zum Herstellen der Gesteinskörnung verpresst und verdichtet wird. Hierdurch kann unter der fakultativen Zugabe von Bindemittel, ein im Wesentlichen fester Körper erzeugt werden, der als Gesteinskörnung eingesetzt werden kann. Vor dem Verpressen und Verdichten sollte kein SiO₂ zugegeben werden, da sonst zu viel CaO, Al₂O₃ oder andere Zugaben für das Binden des SiO₂ benötigt werden.

Entsprechend der Erfindung wurde erkannt, dass durch das Austreiben von Kristallwasser aus natürlichen Materialien, wie verwitterten ultramafischen Gesteinen, beispielsweise Serpentinit, ein Zwischenmaterial erzeugt werden kann, das geeignet ist, CO₂ in hohem Maße zu binden.

Auf diese Weise können große Mengen von CO₂ mit relativ geringem Energieaufwand gebunden werden. Beispielsweise ist es möglich, mit ca. 1 t Serpentinit mittels des erfindungsgemäßen Verfahrens ca. 0,6 t CO₂ innerhalb von wenigen Stunden zu binden.

Bevorzugt ist es, wenn die thermische Behandlung des Ausgangsproduktes bei einer Temperatur von mindestens 550°C und/oder maximal 750°C durchgeführt wird und wenn das Ausgangsproduktes mindestens 5 min, vorteilhafterweise 15 min, bevorzugt 30 min, noch bevorzugter mindestens 60 min thermisch behandelt wird.

Vorteilhaft ist es, die für ein bestimmtes Material charakteristische Entwässerungstemperatur möglichst genau mit einer Abweichung von weniger als 20°C einzuhalten. Wenn die Temperatur während der thermische Behandlung zu gering ist, tritt keine oder nur eine ungenügende Entwässerung des Magnesiumsilikathydrat, wie des Serpentinits, ein. Bei zu hohen Temperaturen wird das Magnesiumsilikathydrat weitgehend in Olivin umgewandelt, welcher eine schlechte Reaktivität aufweist. Nur in einem engen Temperaturbereich tritt eine Entwässerung ohne beziehungsweise mit geringer Olivinbildung auf. Stattdessen bildet sich das entwässerten Ausgangsprodukte in Form einer röntgenamorphen Phase mit einem geringen Restwassergehalt zwischen 2 und 5 Mass.-%. Diese Phase weist eine hohe Reaktivität auf und ist das Zielprodukt der thermischen Behandlung.

Daher ist es bevorzugt, wenn das Aggregat zur thermischen Behandlung eine im Wesentlichen homogene Temperaturverteilung aufweist. Hierdurch kann eine gute Entwässerung erreicht werden ohne, dass ungewollte Nebenstoffe entstehen. Daher ist es vorteilhaft, wenn, um die angestrebte Entwässerungstemperatur im Ofen möglichst exakt und über einen Großteil der Verweildauer des Materials einhalten zu können, der Ofen nicht mit einer Flamme direkt beheizt wird. In diesem Fall wäre das Material temporär sehr hohen Temperaturen ausgesetzt, die zu einer Olivinbildung führen würden. Beispielweise ist die Temperaturverteilung in einem direkt beheizten Drehrohrofen zu ungleichmäßig. Daher ist es vorteilhaft, wenn als Aggregat zur thermischen Behandlung ein Drehrohrofen, insbesondere ein indirekt beheizter Drehrohrohen ohne im Reaktionsraum vorhandene offene Flammen, verwendet wird. Besonders genau kann die Temperatur während der thermischen Behandlung, welche auch als Brenntemperatur bezeichnet werden kann, bei elektrisch beheizten Öfen gesteuert werden. Die elektrische Beheizung sollte insbesondere für die genaue Einhaltung der Zieltemperatur im Ofenraum verwendet werden. Es ist vorteilhaft den Ofen mit elektrischer Energie aus regenerativen Energiequellen zu beheizen, da herbei keine CO₂ Emissionen und Abgases entstehen sowie kein Brennstoff verbraucht wird. Im Gegensatz dazu ist das Vorheizen auch durch andere Wärmequellen möglich, insbesondere durch einen Wärmetauscher, welcher dem entwässerten Ausgangsprodukt, wie dem gebrannten Serpentinit, einen Teil seiner Wärme entnimmt und dieses dadurch abkühlt, wobei gleichzeitig diese Wärme ungebranntem Serpentinit zugeführt wird. Auch die Verwendung von Rauchgas aus Verbrennungsprozessen ist, wenn möglich zu verhindern, da so beispielsweise ein unkontrolliertes Binden von CO₂ auftritt.

Um eine ausreichende Verweildauer bei der Zieltemperatur zu erreichen, sind Drehrohröfen bevorzugt, da sie ein großes Volumen aufweisen und somit ein großer Durchsatz erreicht werden kann. Weiterhin zeichnen sich Drehrohröfen durch eine gute thermische Effizienz aus.

Besonders effizient ist die thermische Behandlung bei kleinen Partikelgrößen des Magnesiumsilikathydrats, wie des gemahlenen Serpentinits, da in diesem Fall das in den Partikeln gebundene Wasser schneller und effizienter ausgetrieben werden kann. Gleichzeitig erleichtert ein geringer Wasserdampfpartialdruck im Aggregat zur thermischen Behandlung, wie einem Ofenraum, die Bildung der reaktiven Phase zum Binden des CO₂. Ein geringer Wasserdampfpartialdruck kann durch einen Luftspülung des Ofenraumes erreicht werden.

Nach dem thermischen Behandeln liegt das entwässerte Ausgangsprodukt, wie getemperter Serpentinit, meist als Pulver vor. Dieses Pulver kann entweder direkt mit CO₂ kontaktiert werden oder zuvor zu einem Festkörper gepresst werden. Ein weiteres Zerkleinern ist nicht nötig und es hat sich sogar herausgestellt, dass ein Aufmalen die weiteren Prozesse negativ beeinflusst.

Das Verpressen und Verdichten des entwässerten Ausgangsproduktes kann so ausgeführt werden, dass die Festkörper mit einem Volumen zwischen 1 mm³ und 30.000 mm³ ausgebildet werden. Diese Größeneignen sich besonders zur Verwendung als Gesteinskörnung.

Ferner hat sich gezeigt, dass das Verpressen und Verdichten vorzugsweise derart ausgeführt wird, dass die Festkörper mit einer Porosität kleiner als 30 Vol.-%, bevorzugt kleiner 20 Vol.-%, vorteilhafterweise kleiner als 10 Vol.-%, ausgebildet werden. Zum einen kann so bei einem nachträglichen Kontaktieren mit CO₂, dieses auf Grund der Porosität gut auch an nicht an der Oberfläche liegendes Material gelangen, zum anderen kann eine derartige Gesteinskörnung besonderes gut verwendet werden.

Je höher die Verdichtung und je geringer die Porosität der Festkörper, desto größer die spätere Festigkeit der Gesteinskörnung, die auch als Sand oder Kies bezeichnet wird. Die gepressten Festkörper sollten so fest sein, dass die weiteren Prozessschritte nicht zu einer Beschädigung führen.

Bei einem Kontaktieren des entwässerten Ausgangsproduktes mit dem CO₂nach dem Verpressen und Verdichten, sollte das entwässerte Ausgangsprodukt zur Weiterer Verarbeitung zu Pellets verpresst werden.

Dazu sind insbesondere vollautomatische Tablettenpressmaschinen geeignet. Bei dem Pressvorgang wird eine geringe Menge des entwässerten Ausgangsproduktes, welches in Pulverform vorliegt, in eine Metallform gefüllt und mit einem passenden Werkzeug verdichtet. Nach dem Pressvorgang kann die Porosität des gepressten Pellets aus dem Verhältnis von Rohdichte und Reindichte bestimmt werden.

Die Porosität sollte weniger als 30 Vol.-%, vorteilhaft weniger als 20 Vol.-%, bevorzugt weniger als 10 Vol.-%, noch besser weniger als 5 Vol.-% betragen. Allerdings ist es vorteilhaft, wenn eine geringe Restporosität verbleibt, damit das CO₂ in den Pellet eindringen kann.

Der Pressvorgang kann durch die Zugabe von Wasser, organischen Flüssigkeiten und anderen Stoffen, welche die Verdichtung des Pulvers erleichtern verbessert werden. Eine geringe Porosität nach dem Pressvorgang sorgt für eine hohe Festigkeit. Weiterhin ist bevorzugt nach dem Pressvorgang eine Grünstandsfestigkeit der Pellets vorhanden, welche das Weiterverarbeiten, wie den Transport und das Behandeln mit CO₂ erleichtert.

Die Festigkeit der ausgehärteten Pellets kann weiterhin gesteigert werden, wenn das Pulver vor dem Pressvorgang mit anderen Stoffen gemischt wird, welche die Festigkeit durch zusätzliche chemische Reaktionen erhöhen. Zu diesen Stoffen gehören beispielsweise NaOH, KOH, Ca(OH)₂ und andere Verbindungen, die Alkalien und/oder Erdalkalien freisetzen, Natriumaluminat, Steinkohlenflugasche, Trass, getemperte Tone und andere Materialien, welche Al₂O₃, CaO, und/oder Alkalien in einer Form enthalten, dass sie während einer Behandlung mit CO₂, bevorzugt in einem Autoklav, mit SiO₂ reagieren können. Es sollten keine Stoffe zugegeben werden, welche Alit oder Belit enthalten, da dies negative Einflüsse auf die Erhärtung haben kann.

Das entwässerte Magnesiumsilikathydrat liegt nach der thermischen Behandlung als Pulver vor und kann, gegebenenfalls unter Zugabe von weiteren Stoffen, verpresst werden. Der Pressvorgang erlaubt das Erreichen einer Grünstandsfestigkeit, welcher die weitere Verarbeitung erleichtert. Im Gegensatz dazu wird durch den Pressvorgang keine dauerhafte Festigkeit erzeugt, welche die Verwendung als Kies erlaubt.

Um eine hohe Druckfestigkeit in den gepressten Partikeln aufzubauen, sind chemische Reaktionen erforderlich, die das Gefüge verkitten und zusammenhalten. Bei dem Kontakt mit CO₂ laufen mehrere Reaktionen ab, die auf unterschiedliche Weise zu einer dauerhaften Festigkeit der Kiespartikel beitragen. Eine Reaktion ist die Bildung von Magnesiumkarbonat oder Magnesiumkarbonathydrat aus dem entwässerten Magnesiumsilikathydrat. Dies erfolgt unter Verbrauch des entwässerten Magnesiumsilikathydrats. Das Magnesium verbindet sich mit dem CO₂ und das SiO₂ wird als amorphe Phase abgeschieden. Dabei erfolgt eine Volumenvergrößerung, da das CO₂ von außen in die gepressten Partikel eindringt. Noch größer ist die Volumenvergrößerung, wenn sich Magnesiumkarbonathydrat bildet. Je größer die Volumenzunahme während der chemischen Reaktion, desto mehr kann von der Porosität ausgefüllt werden, die nach dem Verpressen verblieben ist. Je geringer die Porosität, desto höher die Festigkeit. Weiterhin bewirken die Phasenneubildungen eine Verkittung aller Phasen und damit den Aufbau einer dauerhaften Festigkeit, die für die Verwendung als Kies erforderlich ist.

Die zweite Reaktion, welche eine dauerhafte Verfestigung der gepressten Partikel bewirkt, ist die Hydratation des entwässerten Magnesiumsilikathydrats. Dabei bilden sich Phasen wie Antigorit, Talk und Lizardit. Diese Hydratationsreaktion ist vergleichbar mit der Erhärtung von Zementstein mit dem Unterschied, dass sich M-S-H anstelle von C-S-H bildet.

Die dritte chemische Reaktion, welche eine Verfestigung bewirkt, ist die Umsetzung des SiO₂ aus der Karbonatisierung mit Stoffen, die vor dem Pressen der Partikel zugegeben wurden. In Anwesenheit von reaktivem Aluminium und Alkalien bilden sich N-A-S-H Phasen, die auch bei der Verfestigung von Geopolymeren auftreten. In Anwesenheit von reaktionsfähigem CaO kann das SiO₂ auch zu C-S-H umgesetzt werden.

Alle drei Reaktion tragen zur Verminderung der Porosität und zur Verfestigung der gepressten Partikel bei, welche danach als Kies für die Betonherstellung und andere Zwecke verwendet werden können. Der Umfang der drei Reaktionen kann durch die äußeren Bedingungen, wie Druck und Temperatur, sowie die chemische Zusammensetzung und die Verfügbarkeit von CO₂ gesteuert werden.

Falls das Verpressen nach dem Kontakt mit CO₂ erfolgt, enthalten die gepressten Partikel kein entwässertes Magnesiumsilikathydrat, sondern Magnesiumkarbonat und SiO₂, sowie gegebenenfalls weitere Phasen. Somit kann die Bildung von Magnesiumkarbonat und Magnesiumkarbonathydrat nicht mehr oder nur in geringem Umfang zur Festigkeitsbildung beitragen. Vielmehr beruht die Verfestigung auf der chemischen Reaktion von Stoffen, welche nach dem Kontakt mit CO₂ zugegeben wurden. Bei der Zugabe von reaktionsfähigem Aluminium und reaktionsfähigen Alkalien können diese mit dem amorphen SiO₂ aus der Sequestrierung zu N-A-S-H reagieren und eine Festigkeitsbildung ermöglichen. Gleiches gilt für die Zugabe von reaktionsfähigem CaO und die Bildung von C-S-H. Ebenso kann entwässertes Magnesiumsilikathydrat zugegeben werden, welches zu M-S-H umgesetzt wird. Darüber hinaus können andere organische und anorganische Bindemittel verwendet werden

Wird das entwässerte Ausgangsprodukt vor dem Verpressen und Verdichten mit dem CO₂ kontaktiert, verbleibt es pulverartig beziehungsweise es bildet sich ein Pulver.

Dieses Verfahren ist weiter unten im Detail erläutert. Für das Herstellen der Gesteinskörnung sollte daher eine Verfestigung des entwässerten mit CO₂ kontaktierten Magnesiumsilikathydrats erfolgen.

Dieses Verfestigen greift vorteilhafterweise auf einer Reaktion des amorphen SiO₂ (Gleichung 5) mit zugebenden Stoffen zurück. Dazu gehören Stoffe, welche Al₂O₃, Alkalien oder CaO in reaktionsfähiger Form eintragen, wie zum Beispiel Steinkohlenflugasche, Hüttensand, getemperte Tone, Natriumaluminat, NaOH, KOH. Es sollte kein Portlandzementklinker zugegeben werden. Nach der Zugabe ist eine intensive Homogenisierung möglich und vorteilhaft. Wenn die Materialien in trockener Form vermischt werden, ist eine gemeinsame Mahlung denkbar. Neben den genannten Stoffen sind auch andere Bindemittel für die Bindung der Kiespartikel einsetzbar, wie organische Klebstoffe.

Anschließend kann das so vorbehandelte Material zu Festkörpern verpresst werden. Dabei sollte die Porosität nach dem Pressvorgang kleiner als 30 Vol.-%, bevorzugt kleiner als 20 Vol.-%, vorteilhafterweise kleiner als 10 Vol.-%, noch besser kleiner als 5 Vol.-% sein. Die gepressten Festkörperkönnen eine geringe Menge an Wasser enthalten. Dieses Wasser kann vor oder nach dem Pressvorgang zugeführt werden. Das Erhärten der Kiespartikel erfolgt durch eine Reaktion des amorphen SiO₂ aus der Sequestrierung mit Al₂O₃ und Alkalien aus den Zugaben unter Bildung von N-AS-H Phasen. Gleichzeitig erfolgt die Bildung von C-S-H Phasen in Anwesenheit von reaktionsfähigem CaO oder durch andere chemische Reaktionen oder physikalische Prozesse.

Diese Reaktionen werden durch eine Temperaturerhöhung auf 40°C, noch auf besser 60°C für mindestens 2 Stunden, vorteilhaft 12 Stunden, bevorzugt 24 Stunden erleichtert, wodurch die Festigkeit der Kiespartikel steigt. Daher werden die Festkörper vorteilhafterweise thermisch für mindestens 2 h, insbesondere für mindestens 24 h, bei Temperaturen von mindestens 40°C, bevorzugt mindestens 60°C behandelt. Dabei sollten die Kiespartikel vor einer Austrocknung geschützt werden. Dies kann mit einer entsprechenden Luftfeuchtigkeit in einer Behandlungseinrichtung, wie einem Autoklav, erfolgen. Bevorzugt ist die Atmosphäre hinsichtlich Wasserdampfes gesättigt.

Unabhängig davon, ob das Kontaktieren des entwässerten Ausgangsproduktes mit CO₂ vor oder nach dem Herstellen der Festkörper erfolgt, kann das Kontaktieren vorteilhafterweise in einem geschlossenen Behältnis, insbesondere in einem Autoklav, oder einem Behältnis mit Überdruck durchgeführt werden. Auf dieses Weise kann der Ablauf des CO₂-Bindens beispielsweise durch Einstellen des CO₂-Partialdrucks, der vorliegenden Temperatur und/oder des Wassergehaltes in der Atmosphäre im Autoklav optimiert werden.

Besonders zügig erfolgt das Binden des CO₂, wenn das Kontaktieren des entwässerten Ausgangsproduktes mit CO₂ nach dem Verpressen und Verdichten mit einem CO₂-Partialdruck von mindestens 0,1 bar durchgeführt wird oder das Kontaktieren des entwässerten Ausgangsproduktes mit CO₂ vor dem Verpressen und Verdichten mit einem CO₂-Partialdruck von mindestens 0,0003 bar, bevorzugt 0,0010 bar, durchgeführt wird. Die Temperaturen während des Ablaufens der Reaktionen können während des Kontaktierens des entwässerten Ausgangsproduktes mit CO₂ bei mindestens 30°C, bevorzugt über 50°C liegen. Der CO₂-Partialdruck kann auch unter 0,5 bar liegen.

Ferner ist es bevorzugt Stoffe, wie Zucker oder anderer organische Zusatzmittel, welche das Bilden von Magnesiumsilikathydrat reduzieren, zu dem entwässerten Ausgangsproduktvor oder während des Kontaktierens des entwässerten Ausgangsproduktes mit CO₂ zuzugeben.

Dies hat die Folge, dass die Menge an gebildetem Magnesiumkarbonat steigt.

Wenn das Behandeln oder Kontaktieren mit CO₂ nach dem Pressen und Verdichten erfolgt ist es vorteilhaft für das Bilden von Magnesiumkarbonat beziehungsweise Magnesiumkarbonathydrat, wenn die Festkörper, wie Pellets, feucht sind. In Anwesenheit von Wasser erfolgt die Reaktion schneller, da die Aktivierungsenergie für die Reaktion geringer ist.

Der Eintrag von Wasser kann durch ein Besprühen der gepressten Pellets mit Wasser erreicht werden. Ebenso ist es möglich, dass in einem Autoklav eine Atmosphäre eingestellt wird, welche hinsichtlich des Wasserdampfes gesättigt ist. Besonders geeignet ist eine Kombination der beiden Varianten zum Wassereintrag.

Durch die Anwesenheit von Wasser wird das Auflösendes entwässerten Ausgangsproduktes, wie des getemperten Serpentinits, und das Bilden von Magnesiumkarbonat und SiO₂ erleichtert. Anstelle von SiO₂ können sich auch andere siliziumhaltige Phasen bilden, wenn weitere Ausgangsstoffe enthalten sind, welche CaO, Al₂O₃ und/oder Alkalien bereitstellen.

Andererseits kann die Anwesenheit von Wasser auch das Bilden von Magnesiumsilikathydraten ermöglichen. Wenn dies eintritt, trägt die Bildung von Magnesiumsilikathydrat auch zur Festigkeit der Gesteinskörnung bei. Allerdings ist das Bilden von Magnesiumsilikathydrat eine Konkurrenzreaktion zur Bildung von Magnesiumkarbonat bzw. Magnesiumkarbonathydrat und vermindert somit die CO₂-Bindekapazität.

Aus diesem Grund ist es empfehlenswert, die Bildung von Magnesiumsilikathydrat zu steuern und gegebenenfalls zu vermindern. Dies kann über die Wahl der Reaktionsparameter erfolgen oder über die Zugabe von Stoffen, welche eine Bildung von Magnesiumsilikathydrat unterdrücken können. Dazu gehören Stoffe wie Zucker, da in Anwesenheit von gelöstem Zucker die Bildung von Magnesiumsilikathydrat herabgesetzt bzw. vollständig vermieden werden kann. Ebenso geeignet sind bestimmte organische Zusatzmittel. Alle diese Stoffe sollten in gelöster Form zugeführt oder vor der Herstellung der Festkörper zugemischt werden.

Die Reaktion mit CO₂ erfolgt durch ein Eindiffundieren des Gases in die Festkörper und das Bilden von Magnesiumkarbonat und/oder Magnesiumkarbonathydrat. Die Diffusion des Gases in die Festkörper wird durch einen hohen CO₂-Partialdruck erleichtert. Dementsprechend kann die Reaktion bevorzugt in einem geschlossenen Behälter durchgeführt werden, da anderenfalls der CO₂-Partialdruck wieder sinkt.

Besonders geeignet sind geschlossenen Stahlbehälter, die auch als Autoklaven bezeichnet werden, da diese hohen Drücken widerstehen können und auch bei erhöhten Temperaturen betrieben werden können. Das CO₂ kann dem mit den Festkörpern gefüllten Autoklav in reiner oder verdünnter Form zugeführt werden. Dazu ist es vorteilhaft, wenn das CO₂ aus dem Abgas bzw. der Abluft von Produktionsanlagen stammt, die zu einer Erhöhung des CO₂-Partialdrucks gegenüber normaler Luft führen.

Derartige Abgase entstehen beispielsweise in Stahlwerken, Glaswerken, Zementbrennanlagen, mit fossilen Brennstoffen betriebenen Kraftwerken und anderen industriellen Prozessen. Dabei liegt der CO₂-Gehalt der Rauchgase häufig zwischen 5

Vol.-% und 30 Vol.-%. Die Nutzung dieser Gase ist vorteilhaft, da ein Verdichten der Gase mit erhöhter CO₂-Konzentration ausreicht, um ein Binden von CO₂ in den Festkörpern im Autoklav zu ermöglichen.

Damit können CO₂-Partialdrücke im Autoklav erreicht werden, die zwischen 0,1 bar und 15 bar liegen. Wenn der Prozess der CO₂-Aufnahme im Autoklav beschleunigt werden soll, kann das CO₂ aus der Luft oder den genannten Abgasen abgetrennt werden und in nahezu reiner Form in den Autoklav eingebracht werden. Die Abtrennung kann mit konventionellen Verfahren wie Aminwäsche oder Calciumlooping erfolgen. Somit können höhere CO₂-Partialdrücke zwischen 1 bar und 50 bar im Autoklav erreicht werden. Um die technische Anwendbarkeit zu erleichtern, sollte der Druck unter 10 bar liegen.

Das Bilden von Magnesiumkarbonat kann durch eine Temperaturerhöhung beschleunigt werden. Dadurch steigt auch der CO₂-Partialdruck im Autoklav an. Ein weiterer Vorteil der Temperaturerhöhung liegt darin begründet, dass das Bilden von wasserfreiem Magnesiumkarbonat (Magnesit, MgCO₃) anstelle von Magnesiumkarbonathydrat (Nesquehonit, MgCO₃·3H₂O) begünstigt wird.

Die Temperatur sollte mindestens 25°C, besser 50°C betragen, aber geringer als 70°C sein.

Das Bilden von Magnesit kann auch erleichtert werden, wenn Magnesitkeime dem entwässerten Ausgangsprodukt vor dem Pressen der Festkörper zugemischt werden. Die Behandlung der Festkörper im Autoklav sollte für mindestens 4 Stunden besser für 12 Stunden, noch besser für 24 Stunden erfolgen, wobei die Atmosphäre wassergesättigt sein sollte und/oder der CO₂-Partialdruck dauerhaft auf einem hohen Niveau gehalten werden sollte, in dem gebundenes CO₂ durch Zuführung von neuem CO₂ ersetzt wird.

Wenn das Kontaktieren des entwässerten Ausgangsproduktes mit CO₂ vor dem Pressen und Verdichten gewünscht ist, kann dies in einer wässrigen Suspension durch Einblasen von CO₂-haltigem Gas durchgeführt werden.

Das Kontaktieren mit CO₂ kann in einem geschlossenen Behälter, beispielsweise einem Wäscher oder einem Autoklav, erfolgen. In diesen kann eine Suspension aus Wasser gegebenenfalls mit Zusätzen und dem pulverförmigen entwässerten Ausgangsprodukt, beispielsweise dem getemperten Serpentinit aufgenommen werden. Auch hier kann die Atmosphäre hinsichtlich des Wasserdampfes gesättigt sein. Ferner können Stoffe zugegeben werden, welche die Reaktion des CO₂ Bindens erleichtern.

Diese Stoffe, wie Zitronensäure Essigsäure oder KH₂PO₄, können zum Beispiel durch Puffern des pH-Wertes auf Werte unter 8,0 bevorzugt unter 7,0, noch besser unter 6,0 das Binden des CO2 erleichtern, da weniger Magnesiumsilikathydrat ent-steht. Weiterhin können Stoffe zugegeben werden, welche ein Bilden von Magnesiumsilikathydrat unterdrücken und damit das Bilden von Magnesiumkarbonat bzw. Magnesiumkarbonathydrat erleichtern. Dazu gehören beispielsweise Zucker und bestimmte organische Zusatzmittel. Es sollte kein NaCl der Lösung zugegeben werden, da dies die Reaktion verlangsamt oder sogar verhindert. Empfehlenswert ist die Zugabe von Magnesitkeimen.

Die Suspension wird bevorzugt kontinuierlich bewegt. Dies kann durch einen Rührer erfolgen. Ferner kann ein CO₂-haltiges Gas in die Suspension eingeblasen werden. Dabei kann es sich um Luft, Rauchgas, andere Abgase aus industriellen Prozessen oder reines CO₂handeln. Für die Reaktion reicht ein CO₂-Partialdruck von 0,0003 bar, bevorzugt 0,0010 bar, noch besser 0,0100 bar, besonders vorteilhaft 0,3000 bar aus. Der Gesamtdruck sollte unter 10 bar, bevorzugt unter 2 bar liegen, um die Anforderungen an die mechanische Stabilität des Behälters verringen zu können. Der CO₂-Partialdruck sollte kleiner als 0,5 bar sein, um den Aufwand für die Anreicherung von CO₂ im eingebrachten Gas zu vermindern.

In der Suspension erfolgt eine Reaktion des entwässerten Ausgangsproduktes mit dem eingebrachten CO₂ und es bilden sich Magnesiumkarbonat bzw. Magnesiumkarbonathydrat und amorphes SiO₂ (Gleichung 5). Teilweise kann das Bilden von Magnesiumsilikathydrat als Konkurrenzreaktion erfolgen.

Es ist vorteilhaft, wenn die Betriebstemperatur des Behandlungsaggregates, insbesondere des Wäschers über der Raumtemperatur liegt, da dadurch die chemischen Reaktionen beschleunigt werden. Dieses Erwärmen kann beispielsweise durch das Einleiten von heißem Rauchgas erfolgen. Die Temperatur im Wäscher sollte mindestens 30°C, bevorzugt 50°C betragen. Allerdings sinkt die Löslichkeit von CO₂ mit steigender Temperatur und die Temperaturerhöhung sollte auf 70°C begrenzt werden. Das Verfahren kann mit sehr geringen CO₂-Partialdrücken arbeiten, diese liegen bevorzugt unter 0,5 bar.

Bevorzugt kann das Kontaktieren mit CO₂, das Herstellen der Suspension sowie das Ausfällen des entstehenden Magnesiumkarbonat oder Magnesiumkarbonathydrat in einem Behälter, der auch aus Reaktor bezeichnet werden kann, idealerweise gleichzeitig, stattfinden. Es kann also ein einstufiger Prozess vorgesehen sein, in dem die Reaktionen bevorzugt in lediglich einem Behälter, beispielsweise einem Autoklav, stattfinden. Dies vereinfacht den Gesamtprozess, insbesondere in der industriellen Anwendung, da zum einen nicht mehrere, eventuell sogar unterschiedliche, Reaktoren in nachgeschalteten Prozessen verwendet werden und zum anderen keine aufwändige Trennung einzelner Zwischenprodukte erforderlich ist. Auch muss die Suspension nicht umgepumpt werden.

Vorteilhaft ist es, wenn im Anschluss das entwässerte mit CO₂ kontaktierte Ausgangsprodukt aus der wässrigen Suspension abgetrennt wird und optional einer thermischen Behandlung, bevorzugt in einem Autoklav, zugeführt wird, insbesondere wenn mehr als 20 Mass.-% Magnesiumkarbonathydrat, wie Nesquehonit vorhanden sind.

Die verbleibende Lösung kann für die Fortsetzung des Sequestrierungsprozesses mit frischem entwässerten Ausgangsprodukt wiederverwendet werden. Der Feststoff in Form des entwässerten mit CO₂ kontaktierten Ausgangsproduktes kann in getrockneter oder ungetrockneter Form weiterverarbeitet werden.

Es ist vorteilhaft, wenn in dem entwässerten mit CO₂ kontaktierten Ausgangsprodukt, welches auch als Sequestrierungsprodukt bezeichnet werden kann, wasserfreies Magnesiumkarbonat (Magnesit) enthalten ist und der Anteil an Magnesiumkarbonathydrat wie Nesquehonit sollte nicht höher als 20 Mass.-%, noch besser weniger als 10 Mass.-% des Gesamtmaterials betragen. Falls der Anteil an Magnesiumkarbonathydrat nach der Sequestrierung zu hoch ist, kann eine thermische Behandlung nach der Reaktion mit CO₂ erfolgen, um das Magnesiumkarbonathydrat in wasserfreies Magnesiumkarbonat umzuwandeln. Dies kann beispielsweise durch ein Behandeln im Autoklav bei 100°C bis 200°C erfolgen oder durch eine Trocknung bei 150°C bis 300°C.

Wie bereits beschrieben, können vor dem Verpressen und Verdichten und nach dem Abtrennen aus der wässrigen Suspension Stoffe, welche Al₂O₃, Alkalien oder CaO in reaktionsfähiger Form eintragen, entwässertes Magnesiumsilikathydrat, und/oder organische Klebstoffe zugegeben werden und eine Homogenisierung erfolgt.

Zum Bereitstellen des Ausgangsproduktes mit einer Feinheit entsprechend einer BET-Oberfläche von 0,1 m²/g oder feiner ist es bevorzugt, wenn das Ausgangsprodukt einer Mahlung, insbesondere einer Nassmahlung, unterzogen wird. Das Ausgangsprodukt liegt zumindest teilweise - auch wenn es zum Teil durch natürliche Verwitterung bereits sehr fein ist - nicht in einer höheren Feinheit vor. Durch eine Mahlung ist diese Feinheit einfach zu erhöhen. Bevorzugt ist auch hierbei eine Nassmahlung, da diese oft energieeffizienter ist als eine Trockenmahlung.

Ferner offenbart ist eine Gesteinskörnung, die mit dem erfindungsgemäßen Verfahren hergestellt wurde und Magnesiumkarbonathydrat und/oder Magnesiumkarbonat aufweist.

Die Gesteinskörnung ist inert und bietet sich an, zusammen mit einem hydraulischen Bindemittel, wie Zementklinker, zu Beton weiterverarbeitet zu werden. Hierzu kann eine weitere Zerkleinerung notwendig sein. Grundsätzlich ist es für den Ablauf des erfindungsgemäßen Verfahrens vorteilhaft, wenn zumindest das Ausgangsprodukt zementklinkerfrei ist. Dies kann insbesondere bedeuteten, dass es keine oder kaum (weniger als 0,1 Mass.-%) Alit- und/oder Belit-Phasen aufweist. Erfahrungsgemäß verlangsamen die im Zementklinker vorhandenen Materialien teilweise die hier erläuterten Reaktionen, so dass die Anwesenheit nicht wünschenswert ist. In geringen Mengen ist Zementklinker jedoch unschädlich.

Optional kann zusätzlich eine Zumischung weiterer Stoffe vorgenommen werden, die die Reaktionsfähigkeit verbessern oder die Eigenschaften des erhärteten Materials modifizieren. Zu diesen Stoffen gehören organische Zusatzmittel, insbesondere Fließmittel, Gesteinsmehle, insbesondere Kalkstein, Dolomit und Olivin, puzzolanische Zusatzstoffe wie Trass, Glasmehl, Steinkohlenflugasche und/oder thermisch aktivierte Tone.

Die entsprechend der Erfindung vorgesehenen Ausgangsprodukte sind meist keine Reinstoffe, so dass Verunreinigungen in hohem Maße vorliegen. Es ist jedoch vorteilhaft, wenn zumindest das molare Verhältnis von Mg zu Ca 10:1 oder größer und/oder das molare Verhältnis von Si zu Al ebenfalls 10:1 oder größer ist. Es hat sich gezeigt, dass die Anwesenheit von Kalzium sowie Aluminium jeweils in Bezug auf Magnesium beziehungsweise Silizium die Reaktionen verlangsamt beziehungsweise teilweise komplett zum Erliegen bringt. Daher ist es nicht unwesentlich, die entsprechenden molaren Verhältnisse deutlich in Richtung von Magnesium beziehungsweise Silizium zu verschieben. Bevorzugt liegt das molare Verhältnis von Mg zu Ca bei mindestens 20:1 und/oder das molare Verhältnis von Si zu Al bei mindestens 20:1.

## Patentansprüche

1. Verfahren zum Herstellen einer Gesteinskörnung aufweisend die Schritte:
a) Bereitstellen eines Ausgangsproduktes aufweisend mindestens 20 Mass.-% Magnesiumsilikathydrat und
Zerkleinern, insbesondere Mahlen, auf eine Feinheit entsprechend einer BET-Oberfläche von 0,1 m²/g oder feiner,
b) Homogenisieren des Ausgangsproduktes,
c) zumindest teilweises Entwässern des Ausgangsproduktes von gebundenem Wasser mittels thermischer Behandlung in einem Aggregat zur thermischen Behandlung, wobei beim thermischen Behandeln das umgewandelte Ausgangsprodukt bei einer Temperatur zwischen 180°C und 1000°C behandelt wird,
wobei nach Schritt c) im entwässerten Ausgangsprodukt vorhandenes Magnesiumsilikathydrat zumindest teilweise entwässert wird und dabei in entwässertes Magnesiumsilikathydrat umwandelt werden kann,
d) Kontaktieren des entwässerten Ausgangsproduktes mit CO₂, wobei CO₂ mit dem entwässerten Magnesiumsilikathydrat reagiert und das CO₂ in entstehendem Magnesiumkarbonathydrat und/oder Magnesiumkarbonat gebunden wird,
e) Verpressen und Verdichten des entwässerten Ausgangsproduktes vor oder nach Schritt d) zu Festkörpern zum Herstellen der Gesteinskörnung.

2. Verfahren nach Anspruch 1,
dadurch**gekennzeichnet,**
dass die thermische Behandlung des Ausgangsproduktes bei einer Temperatur von mindestens 550°C und/oder maximal 750°C durchgeführt wird und dass das Ausgangsproduktes mindestens 15 min, bevorzugt 30 min, noch bevorzugter mindestens 60 min thermisch behandelt wird.

3. Verfahren nach Anspruch 1 oder 2,
**dadurch gekennzeichnet,**
**dass** das Aggregat zur thermischen Behandlung eine im Wesentlichen homogene Temperaturverteilung aufweist.

4. Verfahren nach einem der Ansprüche 1 bis 3,
dadurch**gekennzeichnet,**
dass als Aggregat zur thermischen Behandlung ein Drehrohrofen, insbesondere ein indirekt beheizter Drehrohrohen ohne im Reaktionsraum vorhandene offene Flammen, verwendet wird.

5. Verfahren nach einem der Ansprüche 1 bis 4,
dadurch**gekennzeichnet,**
dass das Verpressen und Verdichten ausgeführt wird, um die Festkörper mit einem Volumen zwischen 1 mm³ und 30.000 mm³ auszubilden.

6. Verfahren nach einem der Ansprüche 1 bis 5,
**dadurch gekennzeichnet,**
**dass** das Verpressen und Verdichten ausgeführt wird, um die Festkörper mit einer Porosität kleiner als 20 Vol.-%, vorteilhafterweise kleiner als 10 Vol.-%, auszubilden.

7. Verfahren nach einem der Ansprüche 1 bis 6,
**gekennzeichnet durch**,
thermisches Behandeln der Festkörper für mindestens 2 h, insbesondere für mindestens 24 h, bei Temperaturen von mindestens 40°C, bevorzugt mindestens 60°C.

8. Verfahren nach einem der Ansprüche 1 bis 7,
dadurch**gekennzeichnet,**
dass das Kontaktieren des entwässerten Ausgangsproduktes mit CO₂ in einem geschlossenen Behältnis, insbesondere in einem Autoklav, einem Wäscher oder einem Behältnis mit Überdruck durchgeführt wird.

9. Verfahren nach einem der Ansprüche 1 bis 8,
dadurch**gekennzeichnet,**
dass das Kontaktieren des entwässerten Ausgangsproduktes mit CO₂ nach dem Verpressen und Verdichten mit einem CO₂-Partialdruck von mindestens 0,1 bar durchgeführt wird oder
dass das Kontaktieren des entwässerten Ausgangsproduktes mit CO₂ vor dem Verpressen und Verdichten mit einem CO₂-Partialdruck von mindestens 0,0003 bar, bevorzugt 0,0010 bar, durchgeführt wird.

10. Verfahren nach einem der Ansprüche 1 bis 9,
**dadurch gekennzeichnet,**
**dass** das Kontaktieren des entwässerten Ausgangsproduktes mit CO₂ bei einer Temperatur von mindestens 30°C, bevorzugt über 50°C durchgeführt wird.

11. Verfahren nach einem der Ansprüche 1 bis 10,
dadurch**gekennzeichnet,**
dass vor oder während des Kontaktierens des entwässerten Ausgangsproduktes mit CO₂ dem entwässerten Ausgangsprodukt Stoffe, wie Zucker oder anderer organische Zusatzmittel, zugeben werden, welche das Bilden von Magnesiumsilikathydrat reduzieren.

12. Verfahren nach einem der Ansprüche 1 bis 10,
dadurch**gekennzeichnet,**
dass das Kontaktieren des entwässerten Ausgangsproduktes mit CO₂ vor Schritt e) in einer wässrigen Suspension durch Einblasen von CO₂-haltigem Gas durchgeführt wird.

13. Verfahren nach Anspruch 12,
**dadurch gekennzeichnet,**
**dass** das entwässerte mit CO₂ kontaktierte Ausgangsprodukt aus der wässrigen Suspension abgetrennt wird und optional einer thermischen Behandlung, bevorzugt in einem Autoklav, zugeführt wird, insbesondere wenn mehr als 20 Mass.-% Magnesiumskarbonathydrat vorhanden sind.

14. Verfahren nach Anspruch 13,
**dadurch gekennzeichnet,**
**dass** vor dem Verpressen und Verdichten in Schritt e) und nach dem Abtrennen aus der wässrigen Suspension Stoffe, welche Al₂O₃, Alkalien oder CaO in reaktionsfähiger Form eintragen, entwässertes Magnesiumsilikathydrat, und/oder organische Klebstoffe zugegeben werden und eine Homogenisierung erfolgt.

## Claims

1. Method for producing an aggregate, comprising the steps of:
a) providing a starting product comprising at least 20 % by mass of magnesium silicate hydrate and
crushing, in particular grinding, to a fineness corresponding to a BET surface area of 0.1 m²/g or finer,
b) homogenizing the starting product,
c) at least partially dewatering the starting product from bound water by means of thermal treatment in a thermal treatment unit, wherein during thermal treatment the converted starting product is treated at a temperature between 180 °C and 1000 °C,
wherein, after step c), magnesium silicate hydrate present in the dewatered starting product is at least partially dewatered and can thereby be converted into dewatered magnesium silicate hydrate,
d) contacting the dewatered starting product with CO₂, wherein CO₂ reacts with the dewatered magnesium silicate hydrate and the CO₂ is bound in the resulting magnesium carbonate hydrate and/or magnesium carbonate,
e) pressing and compacting the dewatered starting product before or after step d) into solids to produce the aggregate.

2. Method according to claim 1,
**characterized in that**
the thermal treatment of the starting product is carried out at a temperature of at least 550 °C and/or at most 750 °C, and
**in that** the starting product is thermally treated for at least 15 minutes, preferably 30 minutes, more preferably at least 60 minutes.

3. Method according to claim 1 or 2,
**characterized in that**
the thermal treatment unit has an essentially homogeneous temperature distribution.

4. Method according to any one of claims 1 to 3,
**characterized in that**
a rotary kiln, in particular an indirectly heated rotary kiln without open flames in the reaction chamber, is used as the thermal treatment unit.

5. Method according to any one of claims 1 to 4,
**characterized in that**
the pressing and compacting is carried out to form solids with a volume of between 1 mm³ and 30,000 mm³.

6. Method according to any one of claims 1 to 5,
**characterized in that**
the pressing and compacting is carried out, in order to form the solids with a porosity of less than 20 % by volume, advantageously less than 10 % by volume.

7. Method according to any one of claims 1 to 6,
**characterized by**
a thermal treatment of the solids for at least 2 h, in particular for at least 24 h, at temperatures of at least 40 °C, preferably at least 60 °C.

8. Method according to any one of claims 1 to 7,
**characterized in that**
the contacting of the dewatered starting product with CO₂ is carried out in a closed container, in particular in an autoclave, a scrubber or a container with overpressure.

9. Method according to any one of claims 1 to 8,
**characterized in that**
the contacting of the dewatered starting product with CO₂ after pressing and compression is carried out with a CO₂ partial pressure of at least 0.1 bar or in that the contacting of the dewatered starting product with CO₂ prior to pressing and compression is carried out with a CO₂ partial pressure of at least 0.0003 bar, preferably 0.0010 bar.

10. Method according to any one of claims 1 to 9,
**characterized in that**
the contacting of the dewatered starting product with CO₂ is carried out at a temperature of at least 30 °C, preferably above 50 °C.

11. Method according to any one of claims 1 to 10,
**characterized in that**
before or during the contacting of the dewatered starting product with CO₂, substances such as sugar or other organic additives are added to the dewatered starting product, which reduce the formation of magnesium silicate hydrate.

12. Method according to any one of claims 1 to 10,
**characterized in that**
the contacting of the dewatered starting product with CO₂ is carried out before step e) in an aqueous suspension by blowing in gas containing CO₂.

13. Method according to claim 12,
**characterized in that**
the dewatered starting product contacted with CO₂ is separated from the aqueous suspension, and
is optionally subjected to thermal treatment, preferably in an autoclave, especially if more than 20 % by mass magnesium carbonate hydrate is present.

14. Method according to claim 13,
**characterized in that**
before pressing and compacting in step e) and after separation from the aqueous suspension, substances which introduce Al₂O₃, alkalis or CaO in reactive form, dewatered magnesium silicate hydrate, and/or organic adhesives are added and homogenization takes place.

## Revendications

1. Procédé de fabrication d'un granulat de roche présentant les étapes suivantes :
a) la fourniture d'un produit de départ présentant au moins 20 % en masse d'hydrate de silicate de magnésium et
le broyage, notamment la mouture, à une finesse correspondant à une surface BET de 0,1 m²/g ou plus fine,
b) l'homogénéisation du produit de départ,
c) la déshydratation au moins partielle du produit de départ de l'eau liée au moyen d'un traitement thermique dans une unité pour le traitement thermique, le produit de départ transformé étant traité lors du traitement thermique à une température comprise entre 180 °C et 1 000 °C,
l'hydrate de silicate de magnésium présent dans le produit de départ déshydraté étant au moins partiellement déshydraté après l'étape c) et pouvant ainsi être transformé en hydrate de silicate de magnésium déshydraté,
d) la mise en contact du produit de départ déshydraté avec du CO₂, le CO₂ réagissant avec l'hydrate de silicate de magnésium déshydraté et le CO₂ étant lié dans l'hydrate de carbonate de magnésium et/ou le carbonate de magnésium formé,
e) la compression et le compactage du produit de départ déshydraté avant ou après l'étape d) en des solides pour la fabrication du granulat de roche.

2. Procédé selon la revendication 1,
**caractérisé en ce que**
le traitement thermique du produit de départ est effectué à une température d'au moins 550 °C et/ou d'au maximum 750 °C et **en ce que** le produit de départ est traité thermiquement pendant au moins 15 minutes, de préférence 30 minutes, de préférence encore au moins 60 minutes.

3. Procédé selon la revendication 1 ou 2,
**caractérisé en ce que**
l'unité pour le traitement thermique présente une répartition de température essentiellement homogène.

4. Procédé selon l'une quelconque des revendications 1 à 3,
**caractérisé en ce qu'**
un four rotatif, notamment un four rotatif à chauffage indirect sans flammes nues présentes dans la chambre de réaction, est utilisé en tant qu'unité pour le traitement thermique.

5. Procédé selon l'une quelconque des revendications 1 à 4,
**caractérisé en ce que**
la compression et le compactage sont effectués afin de former les solides ayant un volume compris entre 1 mm³ et 30 000 mm³.

6. Procédé selon l'une quelconque des revendications 1 à 5,
**caractérisé en ce que**
la compression et le compactage sont effectués afin de former les solides ayant une porosité inférieure à 20 % en volume, de préférence inférieure à 10 % en volume.

7. Procédé selon l'une quelconque des revendications 1 à 6,
**caractérisé par**
le traitement thermique des solides pendant au moins 2 h, notamment pendant au moins 24 h, à des températures d'au moins 40 °C, de préférence d'au moins 60 °C.

8. Procédé selon l'une quelconque des revendications 1 à 7,
**caractérisé en ce que**
la mise en contact du produit de départ déshydraté avec du CO₂ est effectuée dans un récipient fermé, notamment dans un autoclave, un laveur ou un récipient avec surpression.

9. Procédé selon l'une quelconque des revendications 1 à 8,
**caractérisé en ce que**
la mise en contact du produit de départ déshydraté avec du CO₂ est effectuée après la compression et le compactage avec une pression partielle de CO₂ d'au moins 0,1 bar, ou
**en ce que** la mise en contact du produit de départ déshydraté avec du CO₂ est effectuée avant la compression et le compactage avec une pression partielle de CO₂ d'au moins 0,0003 bar, de préférence 0,0010 bar.

10. Procédé selon l'une quelconque des revendications 1 à 9,
**caractérisé en ce que**
la mise en contact du produit de départ déshydraté avec du CO₂ est effectuée à une température d'au moins 30 °C, de préférence supérieure à 50 °C.

11. Procédé selon l'une quelconque des revendications 1 à 10,
**caractérisé en ce qu'**
avant ou pendant la mise en contact du produit de départ déshydraté avec du CO₂, on ajoute au produit de départ déshydraté des substances telles que des sucres ou d'autres additifs organiques qui réduisent la formation d'hydrate de silicate de magnésium.

12. Procédé selon l'une quelconque des revendications 1 à 10,
**caractérisé en ce que**
la mise en contact du produit de départ déshydraté avec du CO₂ est effectuée avant l'étape e) dans une suspension aqueuse par injection d'un gaz contenant de CO₂.

13. Procédé selon la revendication 12,
**caractérisé en ce que**
le produit de départ déshydraté mis en contact avec du CO₂ est séparé de la suspension aqueuse et est éventuellement amené à un traitement thermique, de préférence dans un autoclave, notamment lorsque plus de 20 % en masse d'hydrate de carbonate de magnésium sont présents.

14. Procédé selon la revendication 13,
**caractérisé en ce qu'**
avant la compression et le compactage à l'étape e) et après la séparation de la suspension aqueuse, des substances introduisant de l'Al₂O₃, des alcalis ou du CaO sous forme réactive, de l'hydrate de silicate de magnésium déshydraté et/ou des adhésifs organiques sont ajoutés et une homogénéisation est effectuée.
